# EUROPEAN PATENT SPECIFICATION

(11) **EP 2 832 561 B1**
(45) Date of publication and mention of the grant of the patent: **06.04.2016**
(21) Application number: 14170607.7
(22) Date of filing: 30.05.2014
(51) Int. Cl.: B60C 23/06, G01G 19/08, B60C 23/04, B60C 23/00, G01S 15/08

(54) **Tire load sensing system of a vehicle**
Reifenbelastungsmesssystem eines Fahrzeugs
Système de détection de charge de pneu d'un véhicule

(30) Priority: 29.07.2013 US 201313953278
(43) Date of publication of application: 04.02.2015
(73) Proprietor: Deere & Company, Moline, IL 61265 (US)
(72) Inventor: Duppong, Steven A, Cedar Falls, IA Iowa 50613 (US); Upchurch, Bruce L, Waterloo, IA Iowa 50701 (US)
(74) Representative: Dehnhardt, Florian Christopher

(56) References cited:
- EP-A1- 2 583 545
- GB-A- 2 450 377
- JP-A- 2006 010 593
- US-A1- 2011 248 861
- US-B1- 6 449 582

## Description

The present invention relates to a tire load sensing system of a vehicle, in particular an agricultural tractor, the tire load sensing system comprising at least one distance sensor mounted on the vehicle adjacent to a corresponding tire, the at leat one distance sensor providing raw distance data representing a distance from the at least one distance sensor to a surface; and an electronic control unit which receives the raw distance data, the electronic control unit determining a filtered distance value for the corresponding tire and calculating a tire deflection value from the filtered distance value.

From EP 2 583 545 A1 a header height control system for an agricultural harvester is known in which tire load is detected by means of a non-contact sensor such as a radar or laser sensor. The radar or laser sensor is located adjacent to the front tires of the agricultural harvester for detecting a distance to the ground underneath the front tires which allows to determine the degree of compression and thus tire load.

GB 2 450 377 A1 and US 2011/248861 A1 show further tire load sensing systems using distance sensors. US 6 449 582 B1 and JP 2006 010593 A describe tire load sensing systems based on tire pressure detection and tire rolling noise analysis, respectively.

It is desired to measure or sense the dynamic load on the tires of an agricultural tractor. Such information could be used, for example, as an input for a tire inflation system automatically changing the tire pressure to respond to axle load conditions of the agricultural tractor, to determine the amount of weight that has been picked up by a front loader attached to the agricultural tractor, or to determine axle load conditions on a trailer coupled to the agricultural tractor.

Therefore, what is needed in the art is a tire load sensing system allowing to measure or sense the dynamic load on the tires of a vehicle, especially on the tires of an agricultural tractor.

These and other objects are achieved by the present invention, wherein a tire load sensing system of a vehicle, in particular an agricultural tractor, is provided. The tire load sensing system comprises at least one distance sensor mounted on the vehicle adjacent to a corresponding tire, the at leat one distance sensor providing raw distance data representing a distance from the at least one distance sensor to a surface. At least one pressure sensor provides tire pressure data representing a tire pressure for the corresponding tire. An electronic control unit receives the raw distance data and the tire pressure data, the electronic control unit determining a filtered distance value for the corresponding tire, calculating a tire deflection value from the filtered distance value, and determining a tire load value by entering the calculated tire deflection value into a stored look-up table containing tire deflection values at known tire pressures obtained from tire pressure data.

For a complete understanding of the objects, techniques, and structure of the invention reference should be made to the following detailed description and accompanying drawings, wherein similar components are designated by identical reference numerals:
- Fig. 1: is a simplified schematic side view of an agicultural tractor with fully inflated left front and rear tires comprising associated distance sensors being part of a tire load sensing system according to the present invention,
- Fig. 2: is a simplified schematic side view of the agricultural tractor with partially deflated right front and rear tires comprising associated distance sensors being part of the tire load sensing system according to the present invention,
- Fig. 3: is a schematic block diagram of the tire load sensing system according to the present invention processing raw distance data from the distance sensors of Figs. 1 and 2, and
- Fig. 4: is a flow chart of an algorithm performed by an electronic control unit of the tire load sensing system of Fig. 3.

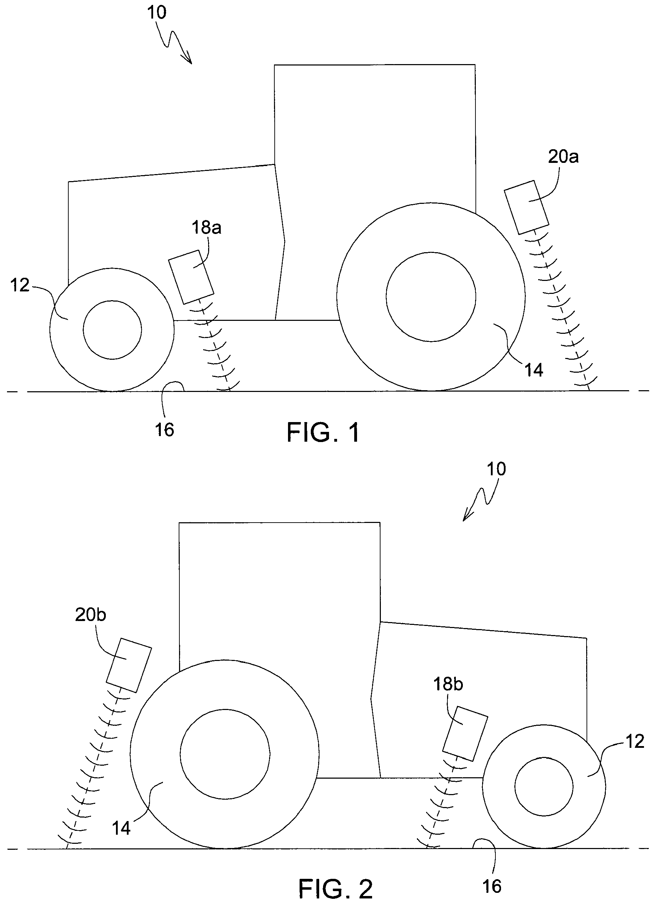

Referring to Fig. 1, a vehicle in the form of an agricultural tractor 10 is shown. The agricultural tractor 10 has fully inflated left front and rear tires 12a and 14a which rest on a surface 16. A left front distance sensor 18a is mounted on the agricultural tractor 10 near to the left front tire 12a and at a distance A1 above the surface 16. A left rear distance sensor 20a is mounted on the agricultural tractor 10 near to the left rear tire 14a and at a distance B1 above the surface 16.

Fig. 2 is similar to Fig. 1, except that right front and rear tires 12b and 14b are partially deflated so that right front distance sensor 18b is at a smaller distance A2 < A1 above the surface 16, and right rear distance sensor 20b is at a smaller distance B2 < B1 above the surface 16.

The distance sensors 18a, 18b, 20a, and 20b are preferably conventional ultrasonic distance sensors, and they are mounted to a chassis of the agricultural tractor 10 so that the field of view of each distance sensor 18a, 18b, 20a, or 20b is looking behind the corresponding tire 12a, 12b, 14a, or 14b with respect to the normal forward travel direction of the agricultural tractor 10. Thus, the distance sensors 18a, 18b, 20a, and 20b will sense the distance to the compressed track that is left in the soil when driving on an agricultural field during normal forward travel. This provides a consistent target surface in relationship to the axles of the agricultural tractor 10. The distance sensors 18a, 18b, 20a, and 20b are part of a tire load sensing system of the agricultural tractor 10, which will be described below in more detail.

The distance sensors 18a, 18b, 20a, and 20b could be placed inside the tires 12a, 12b, 14a, and 14b on the rims and measure the deflection from the inside of the tires 12a, 12b, 14a, and 14b and transmit the associated raw distance data to the tire load sensing system via a wireless data link. The distance sensors 18a, 18b, 20a, and 20b could also be mounted to the axles of the agricultural tractor 10 in order to detect subtle changes in the distance from the axles to the surface 16 based on tire pressure.

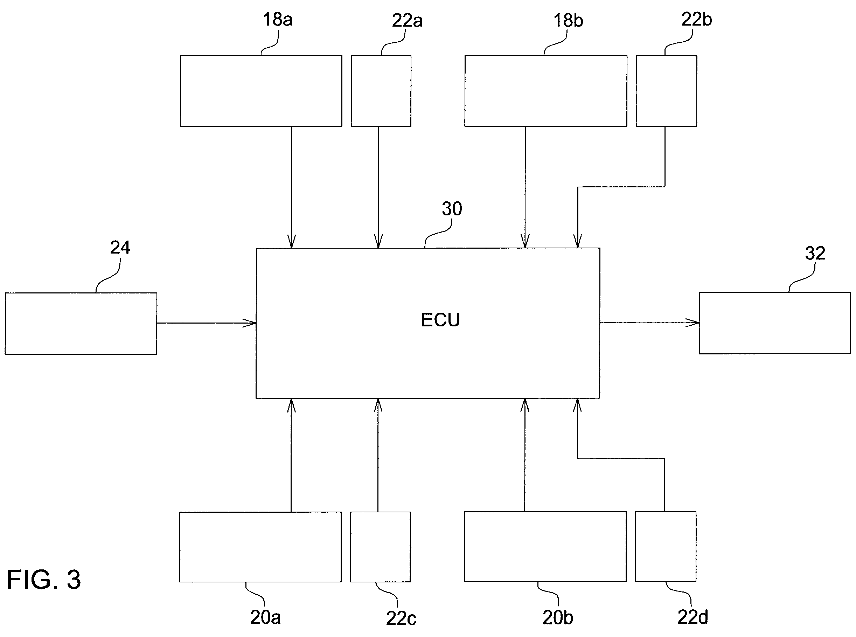

Referring now to Fig. 3, the tire load sensing system includes left and right front distance sensors 18a and 18b, and left and right rear distance sensors 20a and 20b. The distance sensors 18a, 18b, 20a and 20b are preferably commercially available ultrasonic distance sensors. Pressure sensors 22a, 22b, 22c, and 22d sense the tire pressure of each of the corresponding tires 12a, 12b, 14a, and 14b. A temperature sensor 24 senses the ambient temperature and is preferably located on the chassis of the agricultural tractor 10. The sensed ambient temperature is used to compensate the raw distance data from distance sensors 18a, 18b, 20a, and 20b to compensate ultrasonic runtime deviations.

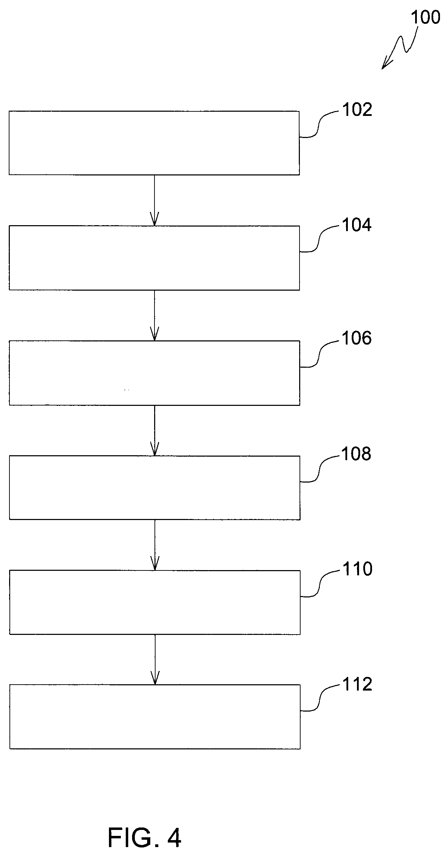

An electronic control unit (ECU) 30 is connected to receive data in the form of associated sensor signals from the distance sensors 18a, 18b, 20a, and 20b, the pressure sensors 22a, 22b, 22c, and 22d, and the temperature sensor 24. The ECU 30 processes the sensor signals and calculates a tire load value by executing an algorithm 100 represented by the flow chart of Fig. 4. The tire load value is displayed on a conventional display 32 in an operator station (not shown) on the agricultural tractor 10. The conversion of the flow chart into a standard language for implementing the algorithm in a microprocessor will be evident to one with ordinary skill in the art.

The execution of the algorithm comprises the following steps as shown in the flow chart of Fig. 4:
In step 102, the ECU 30 obtains raw distance data from the distance sensors 18a, 18b, 20a, and 20b.

In step 104, the ECU 30 reads tire pressure data of the tire pressure sensors 22a, 22b, 22c, and 22d, and temperature data of the temperature sensor 24.

In step 106, the ECU 30 compensates the raw distance data based on the temperature data.

In step 108, the compensated distance data is filtered by the ECU 30 using a running average method for obtaining filtered distance values for each of the distance sensors 18a, 18b, 20a, and 20b.

In step 110, an offset value based on the location of the distance sensors 18a, 18b, 20a, and 20b on the chassis of the agricultural tractor 10 is subtracted from the filtered distance values to obtain tire deflection values for each tire 12a, 12b, 14a, and 14b.

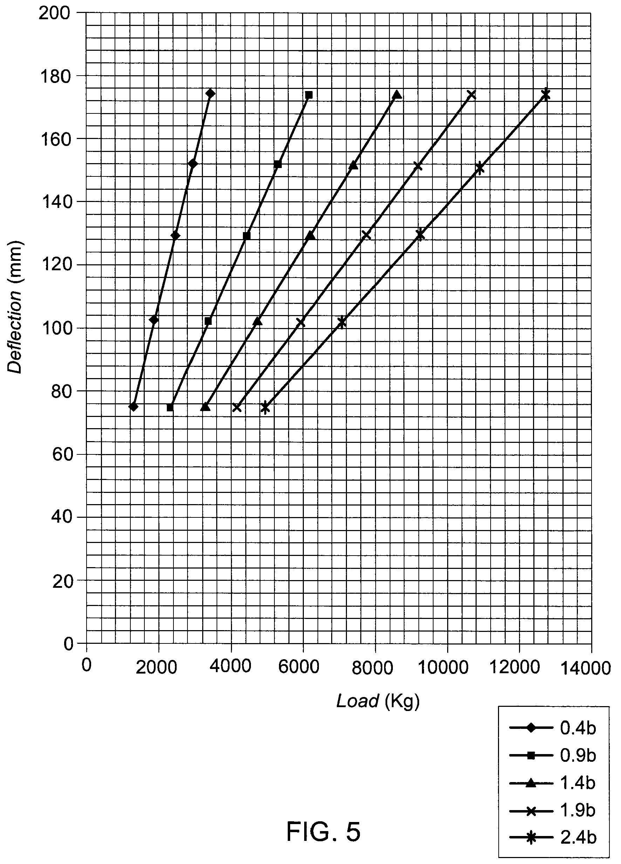

In step 112, tire load values are determined for each tire 12a, 12b, 14a, and 14b by entering the calculated tire deflection values into a stored look-up table containing tire deflection values at known tire pressures obtained from tire pressure data, based on information published by tire manufacturers. An example of such a table is illustrated by Fig. 5.

The ECU 30 may also, in response to changes in the determined tire load values, generate tire pressure adjustment signals which could be used by a tire inflation system (not shown) to automatically adjust the tire pressures to desired values.

## Claims

1. A tire load sensing system of a vehicle, in particular an agricultural tractor, the tire load sensing system comprising at least one distance sensor (18a, 18b, 20a, 20b) mounted on the vehicle (10) adjacent to a corresponding tire (12a, 12b, 14a, 14b), the at leat one distance sensor (18a, 18b, 20a, 20b) providing raw distance data representing a distance from the at least one distance sensor (18a, 18b, 20a, 20b) to a surface (16); and an electronic control unit (30) which receives the raw distance data, the electronic control unit (30) determining a filtered distance value for the corresponding tire (12a, 12b, 14a, 14b) and calculating a tire deflection value from the filtered distance value, **characterized by** further comprising at least one pressure sensor (22a, 22b, 22c, 22d), the at leat one pressure sensor (22a, 22b, 22c, 22d) providing tire pressure data representing a tire pressure for the corresponding tire (12a, 12b, 14a, 14b), the electronic control unit (30) receiving the tire pressure data and determining a tire load value by entering the calculated tire deflection value into a stored look-up table containing tire deflection values at known tire pressures obtained from tire pressure data.

2. The tire load sensing system according to claim 1, **characterized by** further comprising a temperature sensor (24) providing temperature data representing a sensed ambient temperature, the electronic control unit (30) compensating the raw distance data based on the temperature data.

3. The tire load sensing system according to claim 1 or 2, **characterized in that** the at least one distance sensor (18a, 18b, 20a, 20b) comprises an ultrasonic distance sensor mounted adjacent to the corresponding tire (12a, 12b, 14a, 14b).

## Patentansprüche

1. Reifenbelastungsmesssystem eines Fahrzeugs, insbesondere eines Ackerschleppers, wobei das Reifenbelastungsmesssystem mindestens einen Abstandssensor (18a, 18b, 20a, 20b), der an einen entsprechenden Reifen (12a, 12b, 14a, 14b) an dem Fahrzeug (10) angrenzend angebracht ist, wobei der mindestens eine Abstandssensor (18a, 18b, 20a, 20b) Abstandsrohdaten bereitstellt, die einen Abstand des mindestens einen Abstandssensors (18a, 18b, 20a, 20b) zu einer Fläche (16) darstellen; und eine elektronische Steuereinheit (30), die die Abstandsrohdaten empfängt, umfasst, wobei die elektronische Steuereinheit (30) einen gefilterten Abstandswert für den entsprechenden Reifen (12a, 12b, 14a, 14b) bestimmt und einen Reifenverformungswert aus dem gefilterten Abstandswert berechnet, **dadurch gekennzeichnet, dass** es ferner mindestens einen Drucksensor (22a, 22b, 22c, 22d) umfasst, wobei der mindestens eine Drucksensor (22a, 22b, 22c, 22d) Reifendruckdaten bereitstellt, die einen Reifendruck für den entsprechenden Reifen (12a, 12b, 14a, 14b) darstellen, wobei die elektronische Steuereinheit (30) die Reifendruckdaten empfängt und einen Reifenlastwert bestimmt, indem sie den berechneten Reifenverformungswert in eine gespeicherte Nachschlagetabelle eingibt, die Reifenverformungswerte bei gekannten Reifendrücken enthält, die von Reifendruckdaten erhalten werden.

2. Reifenbelastungsmesssystem nach Anspruch 1, **dadurch gekennzeichnet, dass** es ferner einen Temperatursensor (24) umfasst, der Temperaturdaten bereitstellt, die eine gemessene Umgebungstemperatur darstellen, wobei die elektronische Steuereinheit (30) die Abstandsrohdaten basierend auf den Temperaturdaten kompensiert.

3. Reifenbelastungsmesssystem nach Anspruch 1 oder 2, **dadurch gekennzeichnet, dass** der mindestens eine Abstandssensor (18a, 18b, 20a, 20b) einen Ultraschallabstandsensor umfasst, der an den entsprechenden Reifen (12a, 12b, 14a, 14b) angrenzend angebracht ist.

## Revendications

1. Système de détection de charge d'un pneu d'un véhicule, en particulier pour un tracteur agricole, le système de détection de charge de pneu comprenant au moins un capteur de distance (18a, 18b, 20a, 20b) monté sur le véhicule (10) en position adjacente à un pneu correspondant (12a, 12b, 14a, 14b), l'au moins un capteur de distance (18a, 18b, 20a, 20b) fournissant des données de distance brutes représentant une distance de l'au moins un capteur de distance (18a, 18b, 20a, 20b) jusqu'à une surface (16) ; et une unité de commande électronique (30) qui reçoit les données de distance brutes, l'unité de commande électronique (30) déterminant une valeur de distance filtrée pour le pneu correspondant (12a, 12b, 14a, 14b) et calculant une valeur d'écart du pneu par rapport à la valeur de distance filtrée, **caractérisé en ce qu'**il comprend en outre au moins un capteur de pression (22a, 22b, 22c, 22d), l'au moins un capteur de pression (22a, 22b, 22c, 22d) fournissant des données de pression de pneu représentant une pression de pneu pour le pneu correspondant (12a, 12b, 14a, 14b), l'unité de commande électronique (30) recevant les données de pression de pneu et déterminant une valeur de charge de pneu en saisissant la valeur d'écart du pneu calculée dans une table à consulter mémorisée contenant des valeurs d'écart du pneu à des pressions de pneu connues obtenues à partir de données de pression de pneu.

2. Système de détection de charge d'un pneu selon la revendication 1, **caractérisé en ce qu'**il comprend en outre un capteur de température (24) fournissant des données de température représentant une température ambiante détectée, l'unité de commande électronique (30) compensant les données de distance brutes sur la base des données de température.

3. Système de détection de charge d'un pneu selon la revendication 1 ou 2, **caractérisé en ce que** l'au moins un capteur de distance (18a, 18b, 20a, 20b) comprend un capteur de distance à ultrasons monté en position adjacente au pneu correspondant (12a, 12b, 14a, 14b).
